# EUROPEAN PATENT APPLICATION

(11) **EP 1 743 809 A2**
(43) Date of publication of application: **17.01.2007**
(21) Application number: 06013366.7
(22) Date of filing: 28.06.2006
(51) Int. Cl.: B60R 21/18

(54) **Airbelt and airbelt apparatus**

(30) Priority: 12.07.2005 JP 2005203220; 15.02.2006 JP 2006037158
(71) Applicant: TAKATA CORPORATION, Minato-ku, Tokyo 106-8510 (JP)
(72) Inventor: Higuchi, Masahiro, Minato-ku Tokyo 106-8510 (JP); Itoga, Yasuo, Minato-ku Tokyo 106-8510 (JP)
(74) Representative: Bertsch, Florian Oliver

(57) **Abstract**

In order to provide an airbelt and an airbelt apparatus in which re-elongation of the airbelt is prevented due to a tensile force applied to the airbelt which is reduced in length in the longitudinal direction after expansion, an airbelt (30) includes a first standard belt (31), a second standard belt (32), and an expandable portion (33) therebetween. A re-elongation preventing member (40) includes end members (41, 42) arranged respectively on both end sides of the expandable portion (33), and a joint member (43) for joining the end members (41, 42). When an inflator is activated, the expandable portion (33) is expanded, and the length of the expandable portion (33) is reduced, and hence the expandable portion (33) is accommodated between the end members (41, 42) of the re-elongation preventing member (40) as a whole. The expanded expandable portion (33) is too thick to pass through belt insertion ports (41a, 42a), even when a significant tensile force F is applied via the standard belt (32), the expandable portion (33) is not elongated.

## Description

### [Technical Field]

The present invention relates to an airbelt and an airbelt apparatus for constraining a passenger upon collision of a vehicle and, more specifically, to an airbelt and an airbelt apparatus whose length in the longitudinal direction thereof is reduced when an expandable portion thereof is expanded.

### [Background Art]

An airbelt apparatus is disclosed, for example, in Japanese Unexamined Patent Application Publication No.2003-312439 in which a part of a webbing material in a seatbelt apparatus is configured to be an expandable portion.

Fig. 3 and Fig. 4 show an airbelt apparatus disclosed in the patent document shown above. A seatbelt 20 includes a shoulder belt portion 6 and a lap belt portion 7. The shoulder belt portion 6 is withdrawn from a shoulder belt retractor 3 provided at a lower portion of a center pillar 2 and extends via a through ring 5 provided at an upper portion of the center pillar 2. The lap belt portion 7 is withdrawn from a lap belt retractor 4 provided on a lower portion of the shoulder belt retractor 3 and extends via a lumber region of a passenger. A tongue device 8 is provided at ends of the shoulder belt portion 6 and the lap belt portion 7 . A buckle device 9 is provided which is fixed to a seat base 10 including a seat frame (not shown) or a slide rail (not shown) for being joined with the tongue device 8. An inflator 11 for the airbelt is provided integrally with the buckle device 9.

The airbelt apparatus is configured in such a manner that, when a vehicle collides and an acceleration sensor (not shown) for detecting a collision detects a value equal to or larger than a predetermined value, a high-pressure gas is generated from the inflator 11, and the high-pressure gas passes through a gas channel in the buckle device 9 and a gas channel in the tongue device 8 and enters into bags BG1, BG2 to expand and deploy webbings WG1, WG2 of bag-shaped belt portions 6b, 7b of the shoulder belt portion 6 and the lap belt portion 7 whereby the passenger is softly constrained.

The shoulder belt portion 6 includes a standard belt portion 6a which does not come into contact with the passenger and the bag-shaped belt portion 6b which is an expandable portion. The bag-shaped belt portion 6b having a portion which comes into contact with a chest region of the passenger comprises the webbing WG1 formed into a bag-shape which generates a tensile force upon collision of the vehicle. The tensile force of the webbing WG1 is generated in association with the expansion of the webbing WG1 formed by circular knitting. The bag BG1 is integrated inside the webbing WG1 of the bag-shaped belt portion 6b of the shoulder belt portion 6.

The lap belt portion 7 includes a standard belt portion 7a which comes into contact with the lumber region of the passenger but is not expanded and deployed, and the bag-shaped belt portion 7b which comes into contact with the lumber region of the passenger and is expanded and deployed. The bag-shaped belt portion 7b includes the webbing WG2 formed into a bag shape which generates a tensile force upon collision of the vehicle. The tensile force of the webbing WG2 is generated in association with the expansion of the webbing WG2 which is formed by circular knitting. The bag BG2 is integrated inside the webbing WG2 of the bag-shaped belt portion 7b of the lap belt portion 7.

### [Disclosure of the Invention]

### [Problems to be Solved by the Invention]

When the airbelt includes the bag-shaped belt and a knitted cover which surrounds the bag-shaped belt, and the knitted cover can hardly elongated in the longitudinal direction of the airbelt but can expand in a direction of expansion of the airbelt, and the knitted cover is reduced in longitudinal length when it is expanded, the entire length of the airbelt is reduced in association with expansion of the airbelt, so that the airbelt fits the passenger.

However, when a significant tensile force is applied to the airbelt of which the longitudinal length is reduced after being expanded in this manner, gas in the airbelt is compressed, and hence the airbelt may be re-elongated in the longitudinal direction, so that the good fit of the airbelt to the passenger is not ensured.

It is an object of the present invention to provide an airbelt and an airbelt apparatus in which a good fit of the airbelt to the passenger is ensured even when a tensile force is applied to the airbelt, which is expanded and hence is reduced in longitudinal length.

### [Means for Solving the Problems]

This object is achieved by an airbag according to claim 1. The dependent claims define preferred or advantageous embodiments of the present invention.

An airbelt according to the present invention includes an expandable portion whose length in the longitudinal direction of the airbelt is reduced when the expandable portion is expanded, and is characterized in that a re-elongation preventing means for preventing re-elongation of the expandable portion in the longitudinal direction after expansion is provided.

The re-elongation preventing means may comprise a non-elongatable joint member coupled with the expandable portion.

The re-elongation preventing means may include end members arranged respectively on both sides of the expandable portion and provided with insertion ports through which the airbelt is inserted, and a non-elongatable joint member for joining the end members with respect to each other.

Alternatively, the re-elongation preventing means may include an end member arranged on one end side of the expandable portion and provided with an insertion port through which the airbelt is inserted, and a non-elongatable joint member joined at one end to the end member and at the other end with the other end side of the expandable portion.

In this case, an anchor for joining the airbelt to a member on a vehicle body side may be provided on the other end side of the expandable portion, and the other end of the joint member is joined to the anchor.

According to a further embodiment, a distal end side of the expandable portion is joined to a member on a vehicle body side and the re-elongation preventing means includes an end member arranged on a rear end side of the expandable portion and provided with an insertion port through which the airbelt is inserted and a non-elongatable joint member joined at one end to the end member and at the other end to the member on the vehicle body side.

The member on the vehicle body side may be a seat or a pillar of the vehicle body.

An airbelt apparatus according to the present invention includes an airbelt as described above and an inflator for expanding the airbelt.

According to the airbelt and the airbelt apparatus in the present invention, since the re-elongation of the expanded expandable portion is prevented, the tensile force of the airbelt can be maintained at a high level for a long time.

According to one of the embodiments described above, the re-elongation of the expandable portion is prevented by the end members which engage with the both ends of the expanded expandable portion and the joint member which prevents separation between the end members. This structure is simple and is achieved at a low cost.

According to another embodiment, the re-elongation of the expandable portion is prevented by the end member which engages with the one end side of the expanded expandable portion and is pulled toward the other end side of the expandable portion by the joint member. This structure is also simple and is achieved at a low cost.

When the anchor for joining the airbelt to the member on the vehicle body side is provided on the other end side of the expandable portion, the joint member may be joined to the anchor.

According to a further embodiment, the distal end side of the expandable portion is joined to the member on the vehicle body side, the end member is arranged on the rear end side of the expandable portion, and the end member is joined to the member on the vehicle body side via the joint member. Therefore, when the expandable portion is expanded, the re-elongation of the expandable portion is prevented by the end member which engages with the rear end side of the expanded expandable portion, and is pulled toward the member of the vehicle body side by the joint member.

In this case, the joint member may be joined to the seat, for example, or may be joined to the pillar of the vehicle body.

In the present invention, "the joint member is non-elongatable" means that the ratio of elongation of the joint member when a predetermined tensile force is applied to the joint member by the expanded expandable portion is 30% or less, preferably 10% or less, wherein the predetermined tensile force may, for example, be the maximum force acting on the joint member during a collision of a corresponding vehicle, which force may be determined by measurements, simulations or the like.

### [Brief Description of the Drawings]

Fig. 1 shows an airbelt according to an embodiment, in which Fig. 1(a) is a perspective view of a re-elongation preventing member, Fig. 1(b) is a perspective view of the re-elongation preventing member in a state of being mounted to the airbelt, and Fig. 1(c) is a longitudinal cross-sectional view when the airbelt is expanded.
Fig. 2 shows another embodiment of the present invention, in which Fig. 2(a) shows a state of an expandable portion before expansion and Fig. 2(b) shows a state of the expandable portion after expansion.
Fig. 3 is a front view showing a related art.
Fig. 4 is a side view showing the related art.
Fig. 5 is a perspective view of the airbelt according to another embodiment.
Fig. 6 shows the airbelt according to still another embodiment, in which Fig. 6(a) is a perspective view of the airbelt, Fig. 6(b) is a cross-sectional view taken along the line B-B in Fig. 6(a), and Fig. 6(c) is a perspective view of an anchor to be mounted to the airbelt.
Fig. 7 shows the airbelt according to still another embodiment, in which Fig. 7(a) shows a state of the expandable portion before expansion, and Fig. 7(b) shows a state of the expandable portion after expansion.
Fig. 8 is a cross-sectional view taken along the line VIII-VIII in Fig. 7.
Fig. 9 is a perspective view of the airbelt in a state in which a protection cover which is shown in Fig. 7 is opened.
Fig. 10 is an explanatory drawing showing a mounting structure of the airbelt and the re-elongation preventing member according to still another embodiment.
Fig. 11 is an exploded perspective view of the airbelt and the re-elongation preventing member according to still another embodiment.

### [Detailed description of Embodiments of the Invention]

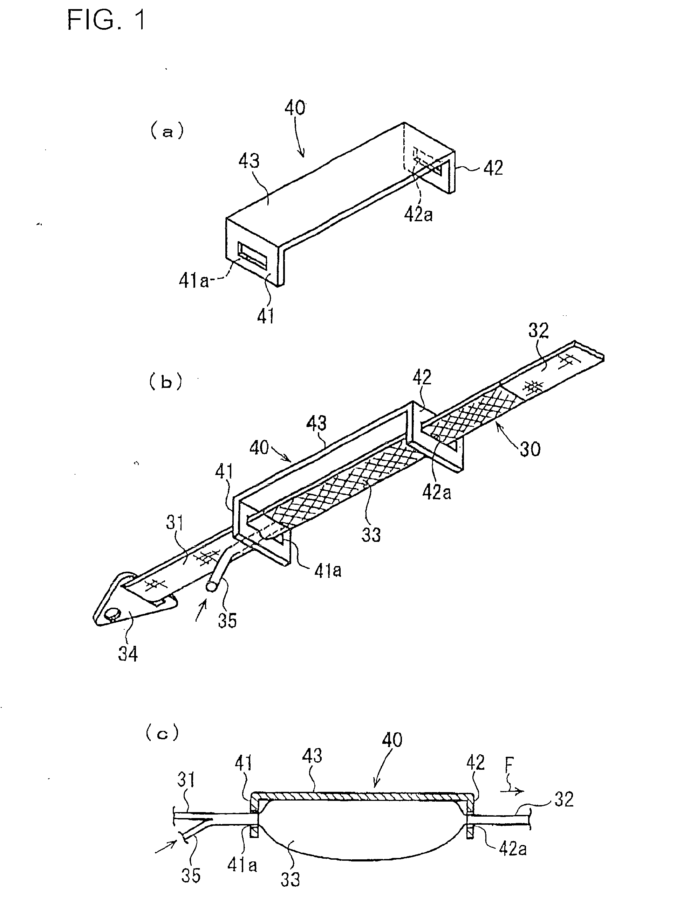

Referring now to the drawings, embodiments of the present invention will be described. Fig. 1 shows an airbelt according to an embodiment in which Fig. 1(a) is a perspective view of a re-elongation preventing member; Fig. 1(b) is a perspective view showing a state in which the re-elongation preventing member is mounted to the airbelt; and Fig. 1(c) is a longitudinal sectional view of the airbelt in an expanded state.

An airbelt 30 includes a first standard belt 31, a second standard belt 32, and an expandable portion 33 therebetween.

The expandable portion 33 includes, although not shown in the drawing, a bag-shaped belt and a knitted cover formed of woven fabric for surrounding the bag-shaped belt. The knitted cover is configured to be flexibly expanded and contracted in the widthwise direction, but to hardly be able to be elongated in the longitudinal direction by being applied with a heat stretching process.

The first standard belt 31 is joined to an anchor 34 at a distal end thereof and is stitched at a proximal end thereof to an end (distal end) of the expandable portion 33. A distal end of the second standard belt is stitched to the other end (rear end) of the expandable portion.

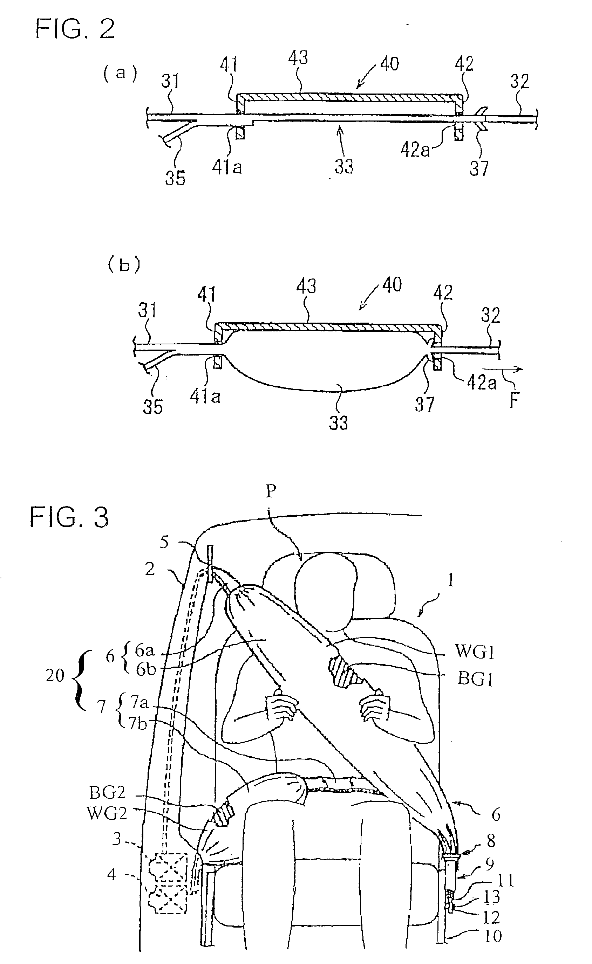

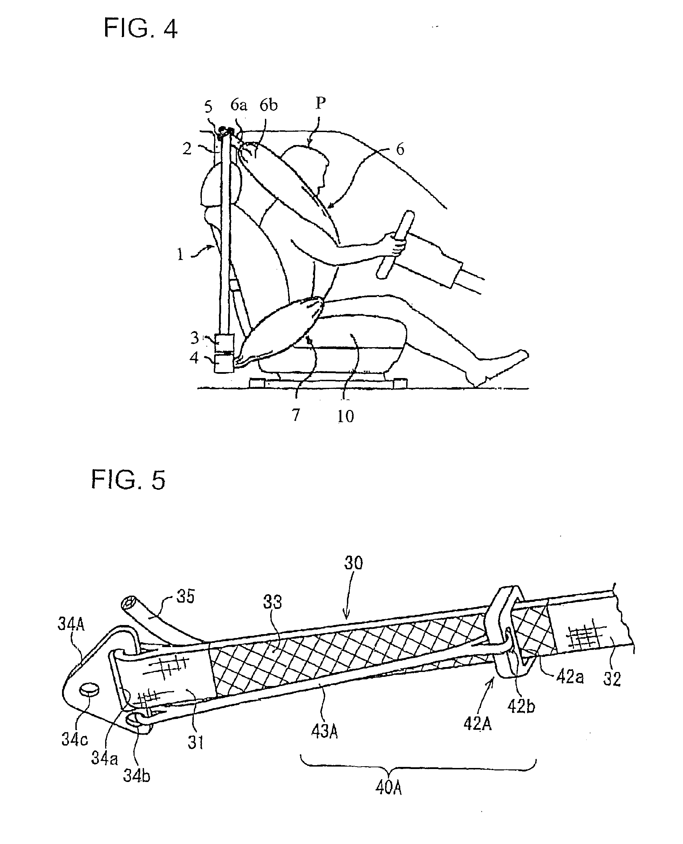

The airbelt 30 is used for the lap belt portion 7 shown in Fig. 3 and Fig. 4.

A gas tube 35 is inserted into the first standard belt 31, and a distal end of the gas tube 35 reaches inside the expandable portion 33. A proximal end of the gas tube is joined to an inflator (not shown).

A re-elongation preventing member 40 for preventing re-elongation is provided in the vicinity of the expandable portion 33. The re-elongation preventing member 40 includes end members 41, 42 arranged respectively on both end sides of the expandable portion 33, and a joint member 43 for connecting the end members 41, 42 with respect to each other.

In this embodiment, the end members 41, 42 and the joint member 43 are integrally formed of material having a predetermined strength, such as metal or synthetic resin. The joint member 43 has a narrow plate shape, and the end members 41, 42 are upright from both end sides in the longitudinal direction of the joint member 43, so that the re-elongation preventing member 40 has substantially an angular C-shape as a whole.

Belt insertion ports 41a, 42a are provided on the end members 41, 42, respectively. The first standard belt 31 is inserted into the belt insertion port 41a, and the expandable portion 33 adjacent to the second standard belt 32 is inserted into the belt insertion port 42a.

When the inflator is activated, as shown in Fig. 1(c), the expandable portion 33 is expanded and fits a passenger. In this case, the length of the expandable portion 33 is reduced, and the expandable portion 33 is accommodated between the end members 41, 42 of the re-elongation preventing member 40 as a whole. Since the expanded expandable portion 33 is too thick to pass through the belt insertion ports 41a, 42a, the expandable portion 33 is not elongated even when a significant tensile force F is applied thereto via the standard belt 32. As a consequence, the tensile force can be kept at a high level for a long time over the entire airbelt 30.

Fig. 2 shows another embodiment of the present invention, in which Fig. 2(a) shows a state of the expandable portion before expansion, and Fig. 2(b) shows a state of the expandable portion after expansion.

In this embodiment, a stopper 37 is provided at an end of the expandable portion 33 on the second standard belt 32 side. The stopper 37 can pass through the belt insertion port 42a of the end member 42 from an outside toward an inside of the re-elongation preventing member 40, but cannot pass through in the opposite direction. In this embodiment, the stopper 37 is formed of flexible material, and is inclined in a direction apart from the end member 42 in a state of being arranged on the outside of the re-elongation preventing member 40.

Other structures of this embodiment are the same as those in Fig. 1.

In this embodiment as well, when the inflator is activated and the expandable portion 33 is expanded, the length of the expandable portion 33 is reduced, and the expandable portion 33 is retracted in the re-elongation preventing member 40. At this time, the stopper 37 is also passed through the belt insertion port 42a, and is arranged in the re-elongation preventing member 40.

Then, when the tensile force F is applied to the airbelt via the second standard belt 32, the stopper 37 is stopped at an edge of the belt insertion port 42a, and hence passage of the expandable portion 33 through the insertion port 42a is prevented further reliably.

The joint member 43 of the re-elongation preventing member 40 is not limited to rigid materials such as metal or synthetic resin, but may be a belt or a string.

Fig. 5 is a perspective view of the airbelt according to another embodiment.

A re-elongation preventing member 40A in this embodiment includes an end member 42A arranged only on the rear end side (second standard belt 32 side) of the expandable portion 33 of the airbelt 30. The end member 42A is joined to an anchor 34A mounted to a distal end side of the expandable portion 33 (more specifically, at a distal end of the first standard belt 31 which is continued to the distal end side of the expandable portion 33) via a joint member 43A.

In this embodiment, the joint member 43A is a string-like member. The joint member 43A is formed of flexible and non-elongatable material. In the present invention, "the joint member 43A is non-elongatable" means that the ratio of elongation of the joint member 43A is 30% or less when a predetermined tensile force is applied to the joint member 43A by the expanded expandable portion 33.

The end member 42A is provided with the belt insertion port 42a and a joint member insertion port 42b. The rear end side of the expandable portion 33 is inserted into the belt insertion port 42a. One end side of the joint member 43A is inserted into the joint member insertion port 42b, and the one end side of the joint member 43A is folded back to the other end side of the joint member 43A and connected to a midsection of the joint member 43A, so that one end of the joint member 43A is joined to the end member 42A.

A belt insertion port 34a and a joint member insertion port 34b are provided also on the anchor 34A. The distal end side of the first standard belt 31 is inserted into the belt insertion port 34a, and the distal end side of the standard belt 31 is folded back to the rear end side of the standard belt 31 and joined to a midsection of the standard belt 31, so that the standard belt 31 and the anchor 34A are joined. Detailed illustration and description are omitted in the above-described embodiment, the joint structure between the anchor 34 and the standard belt 31 in the above-described embodiment is also the same.

The other end side of the joint member 43A is inserted into the joint member insertion port 34b and the other end side of the joint member 43A is folded back to the one end side of the joint member 43A and jointed to the midsection of the joint member 43A, so that the other end of the joint member 43A is joined to the anchor 34A.

Reference numeral 34c designates a bolt insertion port through which a mounting bolt (not shown) is inserted for mounting the anchor 34A to the member on the vehicle body side. The anchor 34A is fixed to a pillar portion or a cabin floor of the vehicle body, or to a frame portion of a seat with mounting bolts or the like through the bolt insertion port 34c. The mounting structure of the anchor 34 to the member on the vehicle body side in the above-described embodiment is also the same.

The length of the joint member 43A, that is, a maximum separation distance from the anchor 34A to the end member 42A is set to be substantially the same as the entire length of the expandable portion 33 (and the first standard belt 31) in a state of being expanded and hence reduced in length.

Other structures of the present embodiment are the same as those in the embodiments described above, and the same reference numerals as those in the above-described embodiments represent the same parts in Fig. 5.

An operation of the re-elongation preventing member 40A in this structure is as follows.

When the inflator (not shown) is activated, gas is introduced into the expandable portion 33 via the gas tube 35, and the expandable portion 33 is expanded. In this case, the length of the expandable portion 33 is reduced and the entire airbelt 30 is contracted. In this embodiment, even when a large tensile force is applied to the expanded expandable portion 33 via the standard belt 32, the end member 42A is engaged with the rear end side of the expandable portion 33, and the end member 42A is pulled toward the distal end side (anchor 34A side) of the expandable portion 33 by the non-elongatable joint member 43A, whereby elongation of the expandable portion 33 is prevented or restrained. Accordingly, the tensile force is maintained at a high level for a long time over the entire airbelt 30.

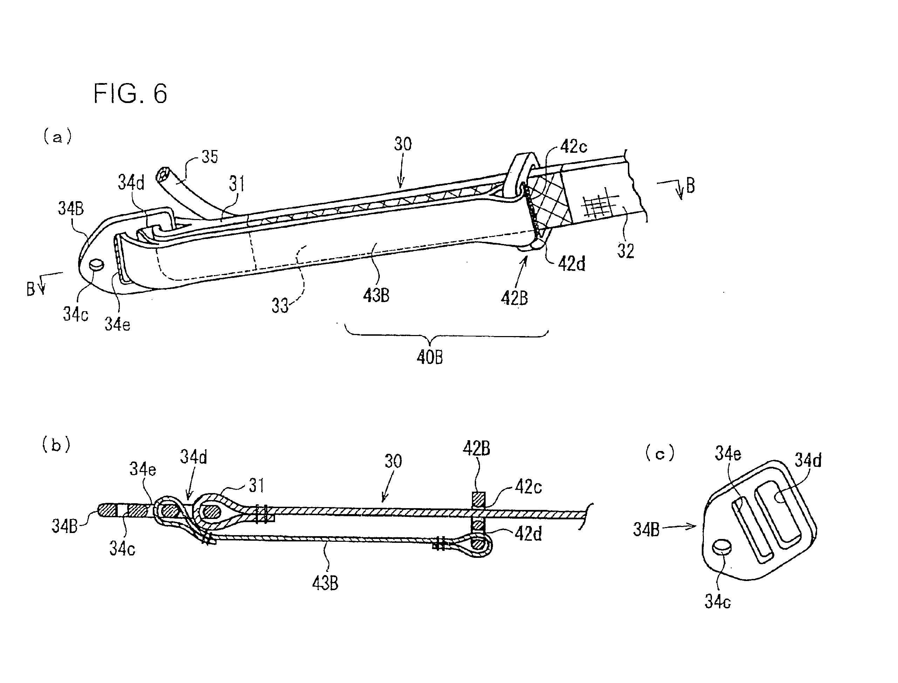

Fig. 6 is a perspective view of the airbelt according to another embodiment. Fig. 6(b) is a cross-sectional view taken along the line B-B in Fig. 6(a). Fig. 6(c) is a perspective view of an anchor to be mounted to the airbelt.

A re-elongation preventing member 40B of this embodiment has a structure such that an end member 42B is arranged on the rear end side of the expandable portion 33 of the airbelt 30 and the end member 42B is joined to an anchor 34B mounted to the distal end side of the expandable portion 33 via a joint member 43B.

As shown in Figs. 6(a)and 6(b), in this embodiment, the joint member 43B is a belt-shaped member. The joint member 43B is also flexible and formed of non-elongatable material. As in the joint member 43A described above, "the joint member 43B is non-elongatable" means that the ratio of elongation of the joint member 43B is 30% or less when a predetermined tensile force is applied to the joint member 43B by the expanded expandable portion 33.

In this embodiment, two belt insertion ports 42c, 42d are provided on the end member 42B. These belt insertion ports 42c, 42d both have a slit shape, and are extended in parallel with each other. The belt insertion port 42c on one side is the same as the belt insertion port 42a on the end members 42, 42A in the above-described respective embodiments, and the rear end side of the expandable portion 33 is inserted into the belt insertion port 42c.

One end side of the belt-shaped joint member 43B is inserted into the other belt insertion port 42d, and the one end side of the joint member 43B is folded back to the other end side of the joint member 43B and connected to a midsection of the joint member 43B, so that one end of the joint member 43B is joined to the end member 42B.

Two slit-shaped belt insertion ports 34d, 34e are provided also on the anchor 34B. The belt insertion ports 34d, 34e are extended in parallel with each other at different positions between the front end and the rear end of the anchor 34B as shown in Fig. 6(c).

The distal end side of the first standard belt 31 is inserted into the belt insertion port 34d on the distal end side of the anchor 34B, and the distal end side of the standard belt 31 is folded back to the rear end side of the standard belt 31 and joined to the midsection of the standard belt 31 so that the standard belt 31 and the anchor 34B are joined.

The other end side of the joint member 43B is inserted into the belt insertion port 34d and then is folded back and inserted into the belt insertion port 34e, and then is connected to the midsection of the joint member 43B, so that the other end of the joint member 43B is joined to the anchor 34B. In contrast, it is also possible to insert the other end side of the joint member 43B into the belt insertion port 34e, and then inserted into the belt insertion port 34d, so as to connect the joint member 43B to the anchor 34B.

Since the belt-shaped joint member 43B joined at the both ends to the end member 42B and the anchor 34B respectively in this manner extends so as to be overlapped with the airbelt 30 as shown in Figs. 6(a) and 6(b), excessive increase in thickness of the airbelt 30 as a whole can be avoided.

As a mater of course, in this embodiment as well, the length of the joint member 43B, that is, the maximum separation distance from the end member 42B to the anchor 34B is set to be substantially the same as the entire length of the expandable portion 33 (and the first standard belt 31) in a state of being expanded and hence reduced in length.

Other structures of the present embodiment are the same as those in the embodiments described above, and the same reference numerals as those in the above-described embodiments represent the same parts in Fig. 6.

In the case of the airbelt 30 provided with the re-elongation preventing member 40B in this structure as well, even when a significant tensile force is applied to the expandable portion 33 which is reduced in length after expansion via the standard belt 32, the end member 42B is engaged with the rear end side of the expandable portion 33, and the end member 42B is pulled toward the distal end side (anchor 34B side) of the expandable portion 33 by the non-elongatable joint member 43B, whereby elongation of the expandable portion 33 is prevented or constrained. As a consequence, the tensile force is maintained at a high level for a long time over the entire airbelt 30.

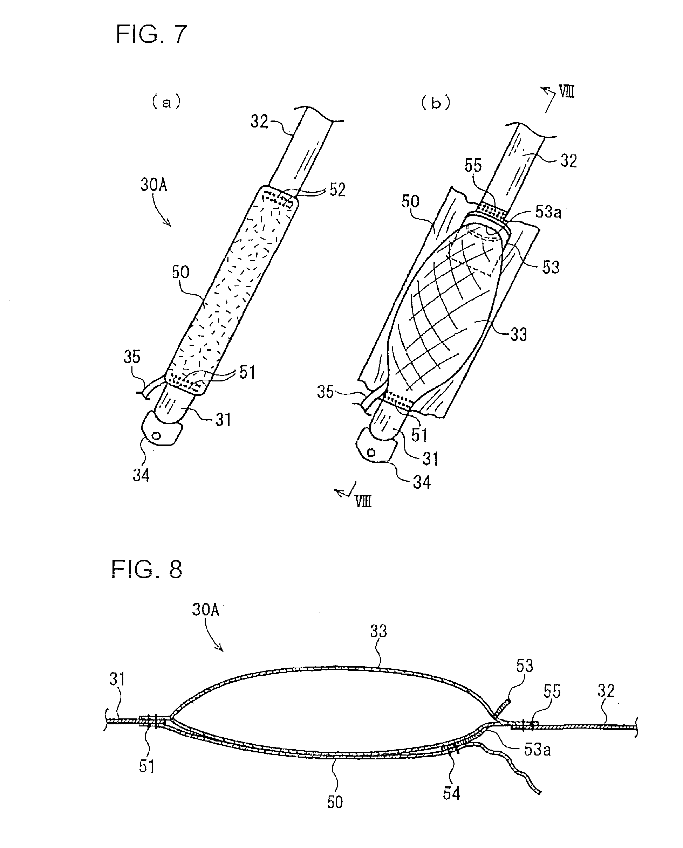

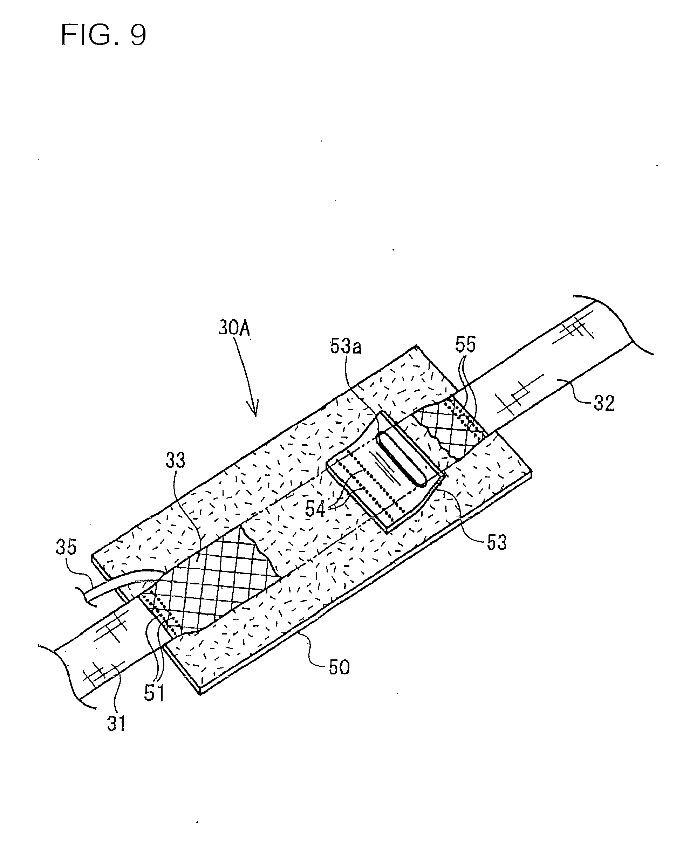

Fig. 7 is a perspective view of the airbelt according to still another embodiment, in which Fig. 7(a) shows a state of the expandable portion before expansion, and Fig. 7(b) shows a state of the expandable portion after expansion. Fig. 8 is a cross-sectional view taken along the line VIII-VIII in Fig. 7(b), and Fig. 9 is a perspective view of the airbelt in a state in which a protection cover is deployed. In Fig. 9, the expandable portion is shown partly in a perspective manner.

An airbelt 30A in this embodiment is provided with a protection cover 50 for covering the expandable portion 33 substantially entirely. The protection cover 50 is formed by folding back a narrow rectangular-shaped sheet material as shown in Fig. 9 and stitched into a tubular shape with a tear seam (not shown). The tear seam is a low-strength seam which is torn when the expandable member 33 is expanded. The sheet material which constitutes the protection cover 50 is formed of a material which is non-elongatable both in the longitudinal direction and the widthwise direction of the expandable portion 33.

In the same manner as the above-described joint members 43A, 43B, "the protection cover 50 (the sheet material which constitutes the protection cover 50) is non-elongatable" means that the ratio of elongation of the protection cover 50 is 30% or less when a predetermined tensile force is applied to the protection cover 50 by the expanded expandable portion 33.

In this embodiment, a distal end side of the protection cover 50 (the direction from the distal end to the rear end corresponds to the direction from the distal end to the rear end of the expandable portion 33, hereinafter) is connected to the first standard belt 31 (in the vicinity of a connection between the standard belt 31 and the expandable portion 33) by a seam 51, and a rear end side thereof is connected to the second standard belt 32 (in the vicinity of the connected portion between the standard belt 32 and the expandable portion 33) by a tear seam 52. The seam 51 is a high-strength seam which is not torn even when the expandable portion 33 is expanded or a large tensile force is applied to the entire airbelt 30A. The tear seam 52 is a low-strength seam which is torn when the expandable portion 33 is expanded.

In this embodiment, the high-strength seam 51 also connects the rear end side of the first standard belt 31 and the distal end side of the expandable portion 33. The connection between the rear end side of the expandable portion 33 and the distal end side of the second standard belt 32 is achieved by a high-strength seam 55 different from the tear seam 52. The seam 55 is a high-strength seam which is not torn even when the expandable portion 33 is expanded or a large tensile force is applied to the entire airbelt 30A.

As shown in Fig. 9, an end member 53 having a belt insertion port 53a is attached to an inside of the protection cover 50. The end member 53 is arranged on the rear end side of the protection cover 50, and the rear end side of the expandable portion 33 is inserted into the belt insertion port 53a of the end member 53. Reference numeral 54 designates a seam which secures the end member 53 to the protection cover 50. The seam 54 is also a high-strength seam which is not torn even when the expandable portion 33 is expanded or a large tensile force is applied to the entire airbelt 30A.

The distance from the distal end side (in the vicinity of the seam 51) of the protection cover 50 to the end member 53 is set to be substantially the same as the entire length of the expandable portion 33 reduced in length after expansion.

In other words, in this embodiment, the protection cover 50 serves as a joint member which joins the end member 53 and the distal end side of the expandable portion 33, and the protection cover 50 and the end member 53 constitutes the re-elongation preventing member which prevents re-elongation of the expandable portion 33 reduced in length after expansion.

Other structures of the present embodiment are the same as those in the embodiments described above, and the same reference numerals as those in the above-described embodiments represent the same parts in Fig. 7 to Fig. 9.

In the case of the airbelt 30A in this structure, when the inflator (not shown) is activated and the expandable portion 33 is expanded, the respective tear seams of the protection cover 50 are torn and the protection cover 50 is opened as shown in Fig. 7(b). In this case, as shown in Fig. 8, the connection between the rear end side of the protection cover 50 and the rear end side of the expandable portion 33 (the second standard belt 32) is released by tearing of the tear seam 52. However, the connection between the distal end side of the protection cover 50 and the distal end side of the expandable portion 33 by the seam 51 is maintained.

As in the case of the respective embodiments described above, when the expandable protion33 is expanded, the length of the expandable portion 33 is reduced, and the airbelt 30A is entirely contracted. In this embodiment as well, even when a large tensile force is applied to the expandable portion 33 via the standard belt 32, the end member 53 is engaged with the rear end side of the expandable portion 33, and the end member 53 is pulled toward the distal end side of the expandable portion 33 by the non-elongatable protection cover 50, so that elongation of the expandable portion 33 is prevented or constrained. As a consequence, the tensile force can be kept at a high level for a long time over the entire airbelt 30A.

Although the non-elongatable protection cover 50 constitutes the joint member which joins the end member 53 to the distal end side of the expandable portion 33 in this embodiment, it is also possible to provide another non-elongatable joint member separately from the protection cover 50.

Although the end member 53 is arranged on the rear end side of the protection cover 50 (joint member) in this embodiment, and the end member 53 is joined to the distal end side of the expandable portion 33 with the protection cover 50, the arrangement of the end member 53 may be inverted between the front end and the rear end.

In other words, it is also possible to arrange the end member 53 on the distal end side of the protection cover 50 and connect the rear end side of the protection cover 50 to the rear end side of the expandable portion 33 (or the second standard belt 32 which is continued therefrom) by the high-strength seam. In this case, the end member 53 is engaged with the distal end side of the expanded expandable portion 33, and the end member 53 is pulled toward the rear end side of the expandable portion 33 by the protection cover 50, so that the re-elongation of the expandable portion 33 is prevented or constrained.

In the re-elongation preventing member in the above-described respective embodiments, the end of the joint member opposite from the end member is secured to the airbelt in itself, or to the anchor for joining the airbelt to the member on the vehicle body side such as the seat or the pillar. However, it is also possible to secure the same directly to the member on the vehicle body side without intermediary of the airbelt or the airbelt anchor.

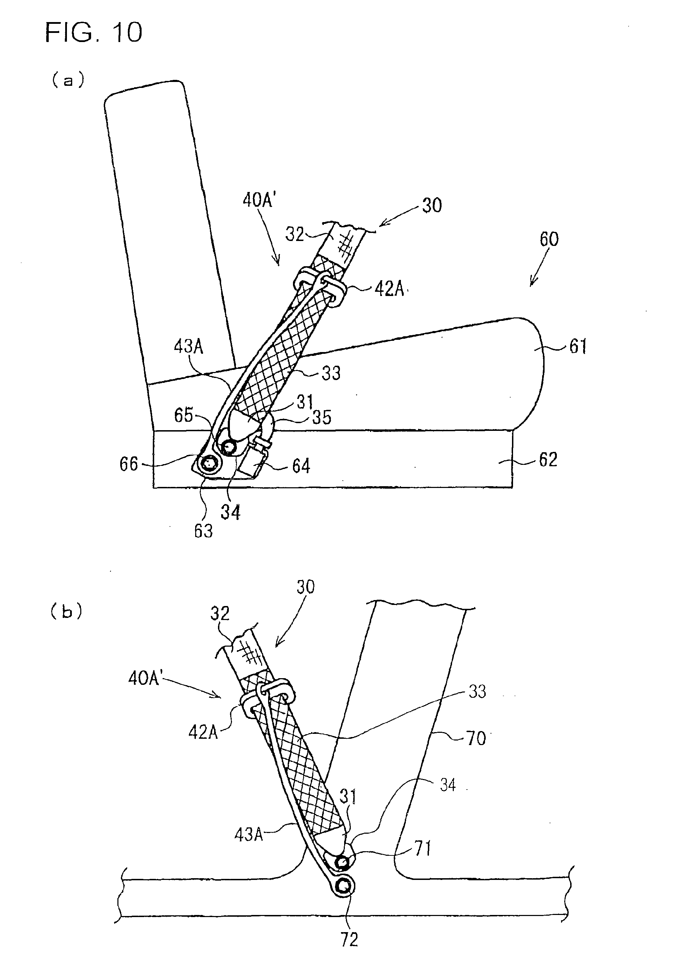

Fig. 10(a) is a side view of a seat showing a mounting example of the airbelt in this structure to the seat. Fig. 10(b) is a side view of a B pillar showing a mounting example of the airbelt to the B pillar.

More specifically, in the embodiment shown in Fig. 10(a), a base member 63 for installing the airbelt apparatus is provided to a side surface of a seat 60 of the vehicle (a side surface of a seat frame 62 for supporting a seat cushion 61), and the distal end side of the airbelt 30 is joined to the base member 63 via the anchor 34. Reference numeral 65 designates a mounting bolt which mounts the anchor 34 to the base member 63. In the case of a re-elongation preventing member 40A' in this embodiment, the end of the joint member 43A opposite from the end member 42A is secured to the base member 63 directly with a securing bolt 66 (separately from the anchor 34).

An inflator 64 is installed on the base member 63, and the gas tube 35 which is continued to the expandable portion 33 of the airbelt 30 is connected to the inflator 64, so that gas is introduced into the expandable portion 33.

In the embodiment shown in Fig. 10(b), the distal end side of the airbelt 30 is joined to a lower portion of a B pillar 70 of the vehicle body via the anchor 34. Reference numeral 71 designates a mounting bolt which mounts the anchor 34 to the B pillar 70. In this embodiment, the end of the joint member 43A on the opposite side from the end member 42A is secured to the B pillar 70 directly with a securing bolt 72 (separately from the anchor 34).

Although the airbelt 30 and the joint member 43A are joined to the B pillar 70 in this embodiment, it is shown by way of example and it may be joined to another pillar (for example, C pillar or the like), and may be joined to other portion of the vehicle body such as the cabin floor.

The configuration of the re-elongation preventing member 40A' in Figs. 10(a) and 10(b) is the same as the re-elongation preventing member 40A shown in Fig. 5 described above except for the fact that the end of the joint member 43A on the opposite side from the end member 42A is directly secured to the seat 60 (base member 63) or the B pillar 70 of the vehicle body with the securing bolt 66 or 72 instead of being joined to the anchor 34, and the same reference numerals as those in Fig. 5 shown represent the same parts in Figs. 10 (a) and 10 (b) .

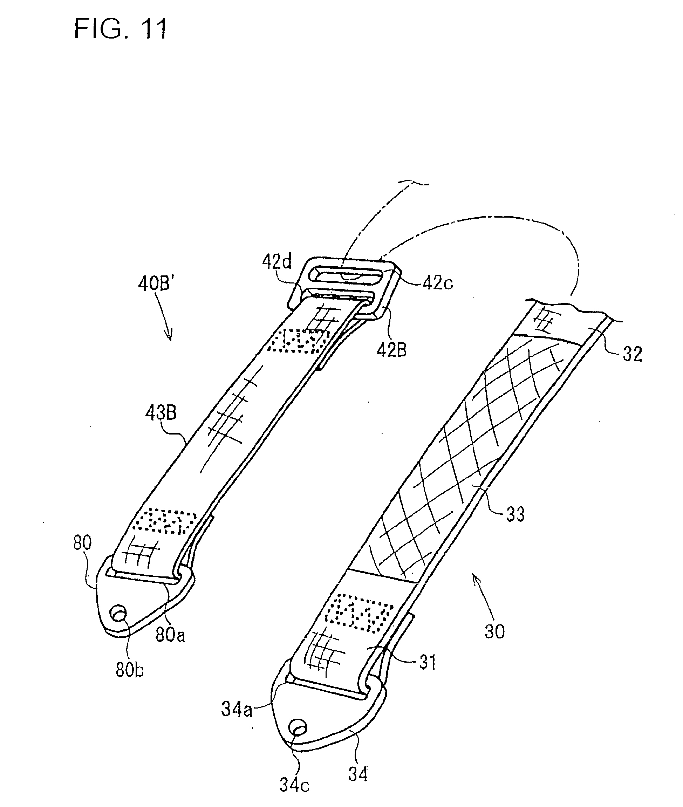

Fig. 11 is an exploded perspective view of the airbelt and the re-elongation preventing member showing an example in which the joint member is mounted to the member on the vehicle body side via a specific anchor.

A re-elongation preventing member 40B' in this embodiment is configured in such a manner that the end of the joint member 43B on the opposite side of the end member 42B is joined to an anchor 80 specific for the joint member 43B instead of being joined to the anchor 34 common with the airbelt 30 in the re-elongation preventing member 40B in Fig. 6 described above.

The anchor 80 is provided with a slit-shaped belt insertion port 80a for allowing insertion of the belt-shaped joint member 43B, the one end side (the side opposite from the end member 42B) of the joint member 43B is inserted into the belt insertion port 80a, and the one end side of the joint member 43B is folded back to the other end side of the joint member 43B (end member 42B side) and joined to the midsection of the joint member 43B, so that the joint member 43B and the anchor 80 are joined. Reference numeral 80b designates a blot insertion port for allowing insertion of a mounting bolt (not shown) which mounts the anchor 80 to the member on the vehicle body side such as the seat or the pillar of the vehicle body.

In this embodiment, the airbelt 30 is joined to the member on the vehicle side via the anchor 34, and the joint member 43B is joined to the member on the vehicle body side separately from the airbelt 30 via the specific anchor 80.

Other structures of the re-elongation preventing member 40B' in this embodiment are the same as the re-elongation preventing member 40B shown in Fig. 6 described above and, in Fig. 11, the same parts as those in Fig. 6 are represented by the same reference numerals.

In Fig. 11, a structure in which the belt-shaped joint member 43B is joined to the member on the vehicle body side via the specific anchor 80 is shown. However, the string-shaped joint member 43A shown in Figs. 10(a) and 10(b) may be joined to the member on the vehicle body side via a specific anchor as a matter of course. The belt-shaped joint member 43B may be secured directly to the member on the vehicle body side with the securing bolt without the intermediary of the anchor as the embodiment in Figs. 10(a) and 10(b).

The above-described respective embodiments are shown by way of example of the present invention, and the present invention is not limited to the above-described respective embodiments.

## Claims

1. An airbelt (30; 30A) comprising: an expandable portion (33) whose length in the longitudinal direction of the airbelt (30; 30A) is reduced when the expandable portion (33) is expanded,
**characterized in that** a re-elongation preventing means (40; 40A; 40A'; 40B; 40B') for preventing re-elongation of the expandable portion (33) in the longitudinal direction after expansion is provided.

2. The airbelt (30; 30A) according to claim 1,
**characterized in that** the re-elongation preventing means (40; 40A; 40A'; 40B; 40B') comprises a non-elongatable joint member (43; 43A; 43B; 50) coupled with the expandable portion (33) to prevent re-elongation thereof after expansion.

3. The airbelt (30) according to claim 2,
**characterized in that** the re-elongation preventing means (40) comprises:
end members (41, 42) arranged respectively on both end sides of the expandable portion (33) and provided with insertion ports (41a, 42a) through which the airbelt (30) is inserted;
said non-elongatable joint member (43) being arranged for joining the end members (41, 42) with respect to each other.

4. The airbelt (30; 30A) according to claim 2,
**characterized in that** the re-elongation preventing means (40A; 40A'; 40B; 40B') comprises:
an end member (42A; 42B; 53) arranged on one end side of the expandable portion (33) and provided with an insertion port (42a; 42c; 42d; 53a) through which the airbelt (30; 30A) is inserted;
said non-elongatable joint member (43A; 43B; 50) being joined at one end to the end member (42A; 42B; 53) and at the other end with the other end side of the expandable portion (33).

5. The airbelt according to claim 4,
**characterized in that** an anchor (34; 34A; 34B) for joining the airbelt (30; 30A) to a member (60; 70) on a vehicle body side is provided on the other end side of the expandable portion (33), and
the other end of the joint member (43; 43A; 43B; 50) is joined to the anchor.

6. The airbelt (30; 30A) according to claim 2,
**characterized in that** a distal end side of the expandable portion (33) is joined to a member (60; 70) on a vehicle body side; and
the re-elongation preventing means (40A; 40A'; 40B; 40B') comprises:
an end member (42A; 42B; 53) arranged on a rear end side of the expandable portion (33) and provided with an insertion port (42a; 42c; 42d; 53a) through which the airbelt (30; 30A) is inserted,
said non-elongatable joint member (43; 43A; 43B; 50) being joined at one end to the end member (42A; 42B; 53) and at the other end to the member (60; 70) on the vehicle body side.

7. The airbelt according to claim 5 or 6, **characterized in that** the member on the vehicle body side is a seat (60) or a pillar (70) of the vehicle body.

8. The airbelt (30; 30A) according to any one of claims 3 to 7,
**characterized in that** a stopper (37) is provided at an end of said expandable portion,
wherein said stopper (37) is adapted such that it can pass through said insertion port (41a; 42a; 42c; 42d; 53a) in one direction only.

9. The airbelt (30; 30A) according to any one of claims 2 to 8,
**characterized in that** said non-elongatable joint member (43; 43A; 43B; 50) has an elongation of 30% or less when a predetermined tensile force is applied to the joint member (43; 43A; 43B; 50) through the expanded expandable portion (33).

10. The airbelt according to claim 9,
**characterized in that** said predetermined tensile force is the maximum force acting on the joint member during a collision of a vehicle equipped with the airbelt.

11. An airbelt apparatus comprising: an airbelt (30; 30A) and an inflator (64) for expanding the airbelt,
**characterized in that** the airbelt (30; 30A) is the airbelt (30; 30A) according to any one of claims 1 to 10.
